# EUROPEAN PATENT APPLICATION

(11) **EP 4 280 369 A1**
(43) Date of publication of application: **22.11.2023**
(21) Application number: 21963640.4
(22) Date of filing: 12.11.2021
(51) Int. Cl.: H01M 50/547

(54) **BATTERY CELL, BATTERY, ELECTRICAL APPARATUS, AND BATTERY PREPARATION METHOD AND APPARATUS**

(71) Applicant: Contemporary Amperex Technology Co., Limited, Ningde, Fujian 352100 (CN)
(72) Inventor: XU, Hu, Ningde, Fujian 352100 (CN)
(74) Representative: Ziebig Hengelhaupt Intellectual Property Attorneys Patentanwaltskanzlei PartGmbB
(86) International application number: PCT/CN2021/130402
(87) International publication number: WO 2023/082192

(57) **Abstract**

Embodiments of the present application provide a battery cell, a battery, a power consumption apparatus, a method for preparing a battery, and an apparatus for preparing a battery. A battery cell (20) includes: a housing (21), including a first wall (21a) and a second wall (21b) oppositely provided in a first direction (x); two electrode terminals (214), respectively located on the first wall (21a) and the second wall (21b), where projections of the two electrode terminals (214) on a plane perpendicular to the first direction (x) are staggered from each other. Through the technical solution, when the electrode terminal (214) is electrically connected with other electrical components (such as electrode terminals of other battery cells), other electrical components may be provided side by side with the electrode terminal (214) by using space perpendicular to the first direction (x), and other electrical components do not need to occupy additional space in the first direction (x), thereby saving space required to achieve an electrical connection of the battery cell (20), and increasing a space utilization rate of the battery cell (20) in the battery.

## Description

### TECHNICAL FIELD

Embodiments of the present application relates to the technical field of batteries, and in particular, to a battery cell, a battery, a power consumption apparatus, and a method and an apparatus for preparing a battery.

### BACKGROUND

Energy saving and emission reduction are the key to the sustainable development of the automotive industry. In this case, electric vehicles have become an important part of the sustainable development of the automotive industry due to their advantages of energy conservation and environmental protection. For electric vehicles, the battery technology is also an important factor for the development of the automotive industry.

In a battery, a space utilization rate of a battery cell in a box body will affect an overall volume of the battery, thereby affecting space occupied by the battery in an electric vehicle and other power consumption apparatuses. Therefore, how to improve the space utilization rate of the battery cell in the box body of the battery is a technical problem to be urgently solved in the battery technology.

### SUMMARY

The present application provides a battery cell, a battery, a power consumption apparatus, and a method for preparing a battery and an apparatus for preparing a battery, which may improve a space utilization rate of a battery cell in a box body of a battery.

In a first aspect, a battery cell is provided, including: a housing, including: a first wall and a second wall oppositely provided in a first direction; two electrode terminals, respectively located on the first wall and the second wall, where projections of the two electrode terminals on a plane perpendicular to the first direction are staggered from each other.

In the technical solution of embodiments of the present application, the two electrode terminals in the battery cell are respectively provided on the first wall and the second wall that are provided opposite to each other in the first direction in the housing, and the projections of the two electrode terminals on the plane perpendicular to the first direction are staggered from each other. When the electrode terminal is electrically connected with other electrical components (such as electrode terminals of other battery cells), other electrical components may be provided side by side with the electrode terminal of the battery cell by using space perpendicular to the first direction. Therefore, through the technical solution of the embodiments of the present application, space of the battery cell in a second direction perpendicular to the first direction may be used to achieve an electrical connection between the electrode terminal of the battery cell and other electrical components, while other electrical components do not need occupy additional space in the first direction, thereby saving space required for the electrical connection of the battery cell, improving the space utilization rate of the battery cell in the box body of the battery, and reducing an overall volume of the battery. Alternatively, the saved space may also be used to optimize setting of related components inside the battery cell, so as to improve overall performance of the battery cell and the battery.

In some possible implementation manners, the two electrode terminals are provided in the staggered manner towards opposite two sub directions in a second direction relative to the center of walls they are located on, where the second direction is perpendicular to the first direction.

Through the technical solution of the implementation manner, the two electrode terminals are provided in the staggered manner towards the opposite two sub directions in the second direction relative to the center of the walls they are located on, and the two electrode terminals have relatively sufficient installation space in the second direction. At the same time, in the second direction, one side of each electrode terminal has relatively sufficient space to accommodate other electrical components electrically connected with the electrode terminal, thereby facilitating the electrical connection of each electrode terminal with other electrical components, further improving the space utilization rate of the battery cell, and improving the overall performance of the battery cell.

In some possible implementation manners, the second direction is parallel to a gravity direction or perpendicular to the gravity direction.

Through the technical solution of the implementation manner, when the second direction is parallel to the gravity direction, the electrode terminal of the battery cell may form an interaction force in the gravity direction with other electrical components (such as electrode terminals of other battery cells), thereby enhancing rigidity and strength between adjacent battery cells in the gravity direction. When the battery is installed on a chassis of a vehicle, when it is hit by an external object such as a flying stone from the bottom of the vehicle, the adjacent battery cells can withstand an impact of an external force in the gravity direction. Therefore, the electrical connection between the adjacent battery cells has high reliability, which can improve installation reliability and safety of the battery in a vehicle and other power consumption apparatuses. In addition, when the second direction is perpendicular to the gravity direction, any electrode terminal in the battery cell may form an interaction force with other electrical components (such as electrode terminals of other battery cells) in a horizontal direction, thereby enhancing the rigidity and the strength of the adjacent battery cells in the horizontal direction. In addition, in the implementation manner, connecting faces of the adjacent electrode terminals between the adjacent battery cells are parallel to the gravity direction, which may facilitate a welding tool to weld the two connecting faces in the gravity direction, thereby improving production and manufacturing efficiency of the battery.

In some possible implementation manners, in the second direction, at least one electrode terminal in the two electrode terminals is provided opposite to electrode terminals of other battery cells, so as to facilitate the electrical connection of the electrode terminals of the two battery cells in the second direction.

In some possible implementation manners, the at least one electrode terminal includes a connecting face perpendicular to the second direction. In the second direction, a connecting face of the at least one electrode terminal is connected with connecting faces of electrode terminals of other battery cells, so as to achieve an electrical connection between the battery cell and other battery cells.

Through the technical solution of the implementation manner, the connecting face perpendicular to the second direction is connected with the connecting faces of the electrode terminals of other battery cells through the at least one electrode terminal in the battery cell, so as to achieve the electrical connection between the battery cell and other battery cells. The electrical connection method does not require additional electrical connection components, and the electrical connection of a plurality of battery cells may be achieved through design of the electrode terminal of the battery cell itself. An overall manufacturing cost is relatively low, and electrical connection reliability is relatively strong.

In some possible implementation manners, the at least one electrode terminal is provided with an opening extending in the second direction, an electrical connector is provided in the opening, and the electrical connector is connected with the electrode terminals of other battery cells, so as to achieve the electrical connection between the battery cell and other battery cells.

Through the technical solution of the implementation manner, the electrode terminals of the two battery cells may be penetrated by the electrical connector, so as to achieve the electrical connection between the two battery cells. Although the implementation manner requires additional electrical connectors, an implementation process is relatively simple. The electrode terminals connected with each other through the electrical connector also have high connection stability and reliability, which can withstand the impact of the external force, thereby improving overall performance of the battery cell.

In some possible implementation manners, a surface of the at least one electrode terminal towards the second direction is provided with a convex structure or a concave structure, and the convex structure or the concave structure cooperates with the concave structure or convex structure of the electrode terminals of other battery cells, so as to achieve the electrical connection between the battery cell and other battery cells.

Through the technical solution of the implementation manner, the convex structure or the concave structure is provided on the surface of the electrode terminal of the battery cell, and through a mutual cooperation of the convex structure and the concave structure of the two electrode terminals in the two battery cells, the electrical connection between the two battery cells is achieved. The implementation manner does not require assistance of a welding process, nor does it require the additional electrical connectors, and a stable and reliable connection between the two electrode terminals may be achieved by simply improving the electrode terminal. On the basis of ensuring electrical connection performance of the battery cell, the implementation manner has a simple process and a low manufacturing cost, which is conducive to production and popularization of the battery cell.

In some possible implementations, a first electrode terminal of the two electrode terminals is located on the first wall in the housing, and in the second direction, the size of the first electrode terminal is less than or equal to half of the size of the first wall, and/or the size of the first electrode terminal is greater than or equal to 5 mm.

Through the technical solution of the implementation manner, the size of the first electrode terminal is less than or equal to half of the size of the first wall, such that outer space of the battery cell of the first wall towards the battery cell may be used to accommodate the electrode terminal of the battery cell itself as well as the electrode terminals of other battery cells, which will not bring additional space occupation. Therefore, through the technical solution, it facilitates to improve the space utilization rate of the battery cell, and it also facilitates to install and set the battery cell in the box body. Moreover, in the second direction, the size of the first electrode terminal may be greater than or equal to 5 mm, such that the first electrode terminal has the certain rigidity and strength in the second direction, and can resist the impact of the external force on the electrode terminal and its connected electrical components, thereby improving the reliability and the safety of the battery cell and the battery where it is located.

In some possible implementation manners, in a third direction, the size of the first electrode terminal is smaller than or equal to the size of the first wall, and/or the size of the first electrode terminal is greater than or equal to 3 mm, where the third direction is perpendicular to the second direction and the first direction.

Through the technical solution of the implementation manner, when the size of the first electrode terminal in the third direction is equal to or close to the size of the first wall, the first electrode terminal has a large area in the second direction, thereby facilitating a mutual electrical connection between the electrode terminal and other electrical components in the second direction, and improving the electrical connection reliability of the battery cell. In addition, the first electrode terminal may also have a relatively large volume, so it may be convenient for at least a portion of the internal components of the battery cell (such as a connecting member used to achieve a connection between an electrode terminal and an electrode component in the battery cell) to be provided in internal space of the electrode terminal, thereby improving the overall performance of the battery cell. Furthermore, when the size of the first electrode terminal is greater than or equal to 3 mm, the electrical connection reliability of the battery cell may be ensured, and the size of the electrode terminal may be reduced, thereby further reducing a volume required for the battery cell and reducing an overall mass of the battery cell.

In some possible implementation manners, in the first direction, a size range of the first electrode terminal is between 3 mm and 25 mm.

Through the technical solution of the implementation manner, the size of the first electrode terminal is designed between 3 mm and 25 mm, such that the first electrode terminal does not occupy too much space, and also has a certain area, which is convenient for achieving the electrical connection between the first electrode terminal and other electrical components.

In some possible implementation manners, the housing further includes: a third wall and a fourth wall oppositely provided in the second direction, the two electrode terminals are respectively provided close to the third wall and the fourth wall, and surfaces of the two electrode terminals are respectively flush with the third wall and the fourth wall.

Through the technical solution of the implementation manner, when the third wall and/or the fourth wall of the battery cell is abutted against other components in the second direction, the electrode terminal may also be abutted against other components, so as to enhance the installation stability of the battery cell.

In some possible implementation manners, the first direction is parallel to a length direction of the battery cell, and the battery cell and other battery cells are attached to each other through at least one wall located in the length direction in the housing.

Through the technical solution of the implementation manner, the two electrode terminals may be respectively located at two ends of the battery cell in its length direction, thus, the battery cell may achieve the connection with other battery cells or the box body through a wall with a large area in the length direction in the housing, improving the connection reliability between the plurality of battery cells or between the battery cell and the box body, and enhancing the overall rigidity and strength of the battery, thereby improving safety performance of the battery in a power consumption apparatus.

In some possible implementation manners, at least one wall located in the length direction of the housing is inclined relative to the gravity direction.

Through the technical solution of the implementation manner, the wall of the housing that is located in the length direction and is inclined relative to the gravity direction may be attached to walls of other battery cells that are also inclined relative to the gravity direction, so as to generate an interaction force in the gravity direction, and the two are restrained and pressed against each other, which may further improve the connection stability between the adjacent battery cells.

In some possible implementation manners, the two electrode terminals are provided symmetrically relative to the center of the battery cell.

Through the technical solution of the implementation manner, the external shape of the two electrode terminals may be the same, and an overall structure of the battery cell is more regular, which facilitates the production and the manufacturing of the battery cell, and also facilitates improvement of the installation stability of the battery cell in the box body.

In some possible implementation manners, the two electrode terminals are of a polyhedral structure.

Through the technical solution of the implementation manner, each surface of the electrode terminal has a certain area, which facilitates contact of the electrode terminal with other components and achieves a relatively reliable connection.

In a second aspect, a battery is provided, including: a box body, and the battery cell according to the first aspect or any possible implementation manners in the first aspect, where the box body is configured to accommodate the battery cell.

In some possible implementation manners, the battery includes a plurality of battery cells arranged in a first direction; where two adjacent electrode terminals in two adjacent battery cells are provided in a staggered manner towards opposite two sub directions in a second direction, and where the second direction is perpendicular to the first direction, and projections of the two adjacent electrode terminals on a plane perpendicular to the second direction at least partially overlap.

In a third aspect, a power consumption apparatus is provided, including: the battery according to the second aspect or any possible implementation manners in the second aspect, where the battery is configured to provide electric energy to the power consumption apparatus.

In a fourth aspect, a method for preparing a battery is provided, including: providing a box body; providing a battery cell, where the battery cell includes: a housing, including: a first wall and a second wall oppositely provided in a first direction; two electrode terminals, respectively located on the first wall and the second wall, where projections of the two electrode terminals on a plane perpendicular to the first direction are staggered from each other; and accommodating the battery cell in the box body.

In a fifth aspect, an apparatus for preparing a battery is provided, including: a provision module, configured to provide a box body, and provide a battery cell, where the battery cell includes: a housing, including: a first wall and a second wall oppositely provided in a first direction; two electrode terminals, respectively located on the first wall and the second wall, where projections of the two electrode terminals on a plane perpendicular to the first direction are staggered from each other; and an installation module, configured to accommodate the battery cell in the box.

In the technical solution of the embodiments of the present application, the two electrode terminals in the battery cell are respectively provided on the first wall and the second wall that are provided opposite to each other in the first direction in the housing, and the projections of the two electrode terminals on the plane perpendicular to the first direction are staggered from each other. When the electrode terminal is electrically connected with other electrical components (such as electrode terminals of other battery cells), other electrical components may be provided side by side with the electrode terminal of the battery cell by using space in a second direction perpendicular to the first direction. Therefore, through the technical solution of the embodiments of the present application, space of the battery cell in the second direction perpendicular to the first direction may be used to achieve an electrical connection between the electrode terminal of the battery cell and other electrical components, while other electrical components do not need occupy additional space in the first direction, thereby saving space required for the electrical connection of the battery cell, improving a space utilization rate of the battery cell in the box body of the battery, so as to reduce an overall volume of the battery. Alternatively, the saved space may also be used to optimize the interior of the battery cell or related components inside the battery, so as to improve overall performance of the battery cell and the battery.

### BRIEF DESCRIPTION OF DRAWINGS

To describe the technical solutions in embodiments of the present application more clearly, the following briefly describes the accompanying drawings required for the embodiments. Apparently, the accompanying drawings in the following description show merely some embodiments of the present application, and persons of ordinary skill in the art may still derive other drawings from these accompanying drawings without creative efforts.
FIG. 1 is a schematic structural diagram of a vehicle according to an embodiment of present application;
FIG. 2 is a schematic structural diagram of a battery according to an embodiment of the present application;
FIG. 3 is a schematic structural diagram of a battery cell according to an embodiment of the present application;
FIG. 4 is a schematic cross-sectional view of a battery cell according to an embodiment of the present application;
Fig. 5 is a schematic perspective view of several battery cells according to an embodiment of the present application;
FIG. 6 is a schematic perspective view of several battery cells according to an embodiment of the present application;
FIG. 7 is a schematic diagram of two adjacent battery cells according to an embodiment of the present application;
FIG. 8 is a schematic diagram of an electrical connection of two battery cells according to an embodiment of the present application;
FIG. 9 is another schematic diagram of another electrical connection of two battery cells according to an embodiment of the present application;
FIG. 10 is another schematic diagram of another electrical connection of two battery cells according to an embodiment of the present application;
FIG. 11 is a schematic top view of a battery according to an embodiment of the present application;
FIG. 12 is a schematic cross-sectional view of FIG. 11 along an A-A' direction;
FIG. 13 is a schematic cross-sectional view of FIG. 11 along a B-B' direction;
FIG. 14 is a schematic flowchart of a method for preparing a battery according to an embodiment of the present application; and
FIG. 15 is a schematic block diagram of an apparatus for preparing a battery according to an embodiment of the present application.

In the drawings, the drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present invention, that is, the present application is not limited to the described embodiments.

In the description of the present application, it should be noted that unless otherwise provided, "a plurality of' means more than two; the terms "above", "below", "left", "right", "outside", "inside" and the like are orientations or positional relationship, and the terms are merely for convenience of describing the present application and for simplifying the description, rather than indicating or implying that an indicated apparatus or element must have a specific orientation, and must be constructed and operated in a specific orientation, which thus may not be understood as limiting the present application. In addition, the terms "first", "second", "third" and the like are only intended for a purpose of description, and shall not be understood as an indication or implication of relative importance. "Vertical" is not strictly vertical, but within an allowable range of error. "Parallel" is not strictly parallel, but within an allowable range of error.

The orientation words appearing in the following description are the directions shown in the figures, and do not limit the specific structure of the present application. In the present application, unless otherwise explicitly specified and defined, the terms "mounting", "connecting", "connection" and "fixing" should be understood in a broad sense, for example, they may be a fixed connection, a detachable connection, or an integrated connection, or may be a direct connection and may also be an indirect connection via an intermediate medium. Those of ordinary skill in the art may understand the specific meanings of the foregoing terms in the present application according to specific conditions.

In the description of the embodiments of the present application, the term "and/or" describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

Unless otherwise defined, all the technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims as well as the drawings of the present application are intended to cover a non-exclusive inclusion. The terms "first", "second", etc. in the description and claims or the above drawings of the present application or the above drawings are used to distinguish different objects and are not used to describe a particular order or primary-secondary relationship.

The "embodiment" mentioned in the present application means that special features, structures, or characteristics described in conjunction with the embodiments may be included in at least one embodiment of the present application. The occurrence of "embodiment" in various positions in the description does not necessarily refer to the same embodiment, nor is it a separate or alternative embodiment that is mutually exclusive to other embodiments. It is explicitly and implicitly understood by those skilled in the art that the embodiments described herein may be combined with other embodiments.

In the present application, a battery refers to a physical module including one or more battery cells to provide electric energy. For example, the battery mentioned in the present application may include a battery module or a battery pack, and the like. The battery generally includes a box body for packaging one or more battery cells. The box body may avoid liquid or other foreign matters to affect charging or discharging of the battery cell.

Optionally, a battery cell may include a lithium-ion secondary battery, a lithium-ion primary battery, a lithium-sulfur battery, a sodium-lithium-ion battery, a sodium-ion battery or a magnesium-ion battery, and the like, which is not limited in the embodiments of the present application. In some embodiments, the battery cell may also be referred to as a cell.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active substance layer. The positive electrode active substance layer is coated on a surface of the positive electrode current collector, the positive electrode current collector not coated with the positive electrode active substance layer protrudes from the positive electrode current collector coated with the positive electrode active substance layer, and the positive electrode current collector not coated with the positive electrode active substance layer is used as a positive electrode tab. As an example, in a lithium-ion battery, a material of the positive electrode current collector may be aluminum, and a positive electrode active substance may be lithium cobaltate, lithium iron phosphate, ternary lithium, lithium manganate and the like. The negative electrode plate includes a negative electrode current collector and a negative active substance layer. The negative active substance layer is coated on a surface of the negative electrode current collector, and the negative current collector not coated with the negative active substance layer protrudes from the negative current collector coated with the negative active substance layer, and the negative electrode current collector not coated with the negative electrode active substance layer is used as a negative electrode tab. A material of the negative electrode current collector may be copper, and a negative electrode active substance may be carbon, silicon and the like. In order to ensure that no fusing occurs when a large current pass, there are a plurality of positive electrode tabs which are stacked together, and there are a plurality of negative electrode tabs which are stacked together. A material of the separator may be polypropylene (polypropylene, PP), polyethylene (polyethylene, PE) and the like. In addition, the electrode assembly may be a winding structure or a laminated structure, and the embodiments of the present application are not limited thereto.

With the development of the battery technology, it is necessary to consider many design factors at the same time, such as energy density, cycle life, discharge capacity, C-rate and other performance parameters. In addition, factors such as weight and volume of the battery need to be considered, which may also limit popularization and use of the battery in a power consumption apparatus.

In some related technologies, a battery is formed of at least one battery cell packaged in a box body. The battery cell includes two electrode terminals, and the two electrode terminals are configured to be electrically connected with other electrical components, so as to achieve transmission of electric energy in the battery cell. In some implementation manners, the two electrode terminals of the battery cell may also be respectively provided on two opposite walls of the battery cell, and the two electrode terminals are respectively located at the same position on the two walls, for example, both are located in the middle area of the two walls. In the implementation manner, in the battery, the electrode terminals of adjacent battery cells are abutted with each other, and then an electrical connection between the electrode terminals of the adj acent battery cells is achieved through processes such as welding. Alternatively, a mutual electrical connection between the electrode terminals of the adjacent battery cells is achieved through additional electrical connectors. However, in either way, space occupied by the adjacent battery cells is relatively large, thereby affecting an overall volume of the battery, which is not conducive to the popularization and the use of the battery in the power consumption apparatus.

In view of this, the present application provides a technical solution, and a new battery cell is provided. In the battery cell, two electrode terminals are respectively provided on two walls of a housing of the battery cell, and relative positions of the two electrode terminals on the two walls are different. Specifically, in the housing, the two walls provided with the two electrode terminals are arranged in a first direction, and projections of the two electrode terminals on a plane perpendicular to the first direction are staggered from each other. When each electrode terminal is electrically connected with other electrical components (such as other battery cells), electrical connection parts of other electrical components may be provided side by side with the electrode terminal of the battery cell in a direction perpendicular to the first direction by using space perpendicular to the first direction, instead of being connected in the first direction, thereby saving space required for the battery cell in the first direction, improving a space utilization rate of the battery cell in a box body of a battery, and further reducing an overall volume of the battery or improving overall performance of the battery.

The technical solution described in the embodiments of the present application is applicable to various apparatuses using the battery, such as mobile phones, portable devices, notebook computers, battery cars, electric toys, electric tools, electric vehicles, ships and spacecraft, and for example, the spacecraft include airplanes, rockets, space shuttles and spaceships, and the like.

It should be understood that the technical solution described in the embodiments of the present application is not limited to the apparatuses described above, but may also be applied to all the apparatuses that use the battery. However, for the sake of brevity, the following embodiments take an electric vehicle as an example for illustration.

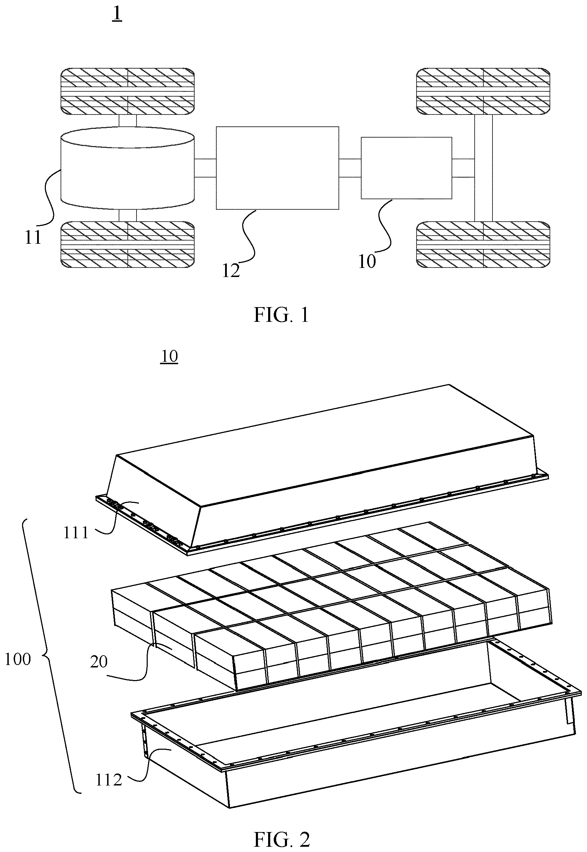

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle and the like. The vehicle 1 may be internally provided with a motor 11, a controller 12 and a battery 10, and the controller 12 is configured to control the battery 10 to supply power to the motor 11. For example, the battery 10 may be provided at the bottom or front or rear of the vehicle 1. The battery 10 may be used for power supply to the vehicle 1. For example, the battery 10 may serve as an operation power source of the vehicle 1 for a circuit system of the vehicle 1, for example, for a working power demand of the vehicle 1 during startup, navigation and running. In another embodiment of the present application, the battery 10 may serve not only as an operation power source of the vehicle 1, but also as a driving power source of the vehicle 1, replacing or partially replacing fuel or natural gas to provide driving power for the vehicle 1.

In order to meet different power demands, a battery may include a plurality of battery cells, where the plurality of battery cells may be in series connection, parallel connection or series-parallel connection. The series-parallel connection refers to a combination of series connection and parallel connection. The battery may also be called a battery pack. Optionally, the plurality of battery cells may be first connected in series, in parallel or in series and parallel to form a battery module, and then a plurality of battery modules are connected in series, in parallel or in series and parallel to form a battery. That is, the plurality of battery cells may directly form the battery, or may first form the battery module, and then the battery modules form the battery.

For example, FIG. 2 shows a schematic structural diagram of a battery 10 according to an embodiment of the present application, and the battery 10 may include a plurality of battery cells 20. The battery 10 may further include a box body 100 (or called a cover body), the interior of the box body 100 is a hollow structure, and the plurality of battery cells 20 are accommodated in the box body 100. As shown in FIG. 2, the box body 100 may include two parts, which are referred to as a first part 111 and a second part 112, respectively, and the first part 111 and the second part 112 are fastened together. The shape of the first part 111 and the second part 112 may be determined according to the shape of the plurality of battery cells 20, and both the first part 111 and the second part 112 may have an opening. For example, the first part 111 and the second part 112 each may be a hollow cuboid and each has only one face as an opening face, the opening of the first part 111 is provided opposite to the opening of the second part 112, and the first part 111 and the second part 112 are fastened to each other to form the box body 100 with a closed cavity. The plurality of battery cells 20 are combined in parallel, in series or in series and parallel and then placed in the box body 100 formed by fastening the first part 111 and the second part 112.

Optionally, in one implementation manner, a plurality of battery cells 20 may first be integrated into at least one battery module, and then the battery module is installed in a box body 100 of a battery 10, forming a form of a battery pack. In the implementation manner, auxiliary structural members such as a crossbeam may be provided between battery modules, which can improve installation stability of the battery module in the box body 100.

Optionally, in a second implementation manner, a plurality of battery cells 20 may also be directly connected with each other, and installed in a box body 100 to form a form of a battery pack, removing an intermediate state of a battery module. There is no need to install the auxiliary structural members such as the crossbeam in the box body 100, thereby reducing a mass of the battery 10 and increasing energy density of the battery 10. The implementation manner may also be referred to as an installation technology of cell to pack (CTP) in related technologies.

Optionally, in a third implementation manner, a box body 100 may be integrated into a power consumption apparatus in which a battery 10 is located, in other words, the box body 100 may be integrally formed with the structural members in the power consumption apparatus. After the plurality of battery cells 20 are connected with each other, they may be directly installed in the box body 100 provided in the power consumption apparatus. As an example, the box body 100 may be integrally provided in a local area of a chassis of the above vehicle 1, and the plurality of battery cells 20 may be directly installed on the chassis of the vehicle 1 after being connected with each other. The implementation manner may also be referred to as an installation technology of cell to chassis (CTC) in the related technologies.

As an example, the plurality of battery cells 20 shown in FIG. 2 may be connected with each other in a plurality of directions and closely arranged, such that the plurality of battery cells 20 may be integrated as a whole, and installed in the box body 100 using the installation technology of CTP or CTC, thereby reducing the mass of the battery 10 and increasing the energy density of the battery 10.

Of course, in addition to an arrangement manner of the plurality of battery cells 20 in an embodiment shown in FIG. 2, the plurality of battery cells 20 may also be provided in the box body 100 in other ways. The embodiments of the present application do not make a specific limit on the number of battery cells 20 arranged in each direction.

Optionally, the battery 10 may also include other structures, which will not be described in detail herein. For example, the battery 10 may also include a confluence component, which is used to achieve an electrical connection between the plurality of battery cells 20, such as parallel connection, series connection or parallel-series connection. Specifically, the confluence component may implement the electrical connection between the battery cells 20 by connecting an electrode terminal of the battery cell 20. Further, the confluence component may be fixed to the electrode terminal of the battery cell 20 by means of welding. Electric energy of the plurality of battery cells 20 may be further led out through a conductive mechanism passing through the box body 100. Optionally, the conductive mechanism may also belong to the confluence component.

According to different power requirements, the number of battery cells 20 may be set to any value. The plurality of battery cells 20 may be connected in series, in parallel or in series and parallel to achieve large capacity or power.

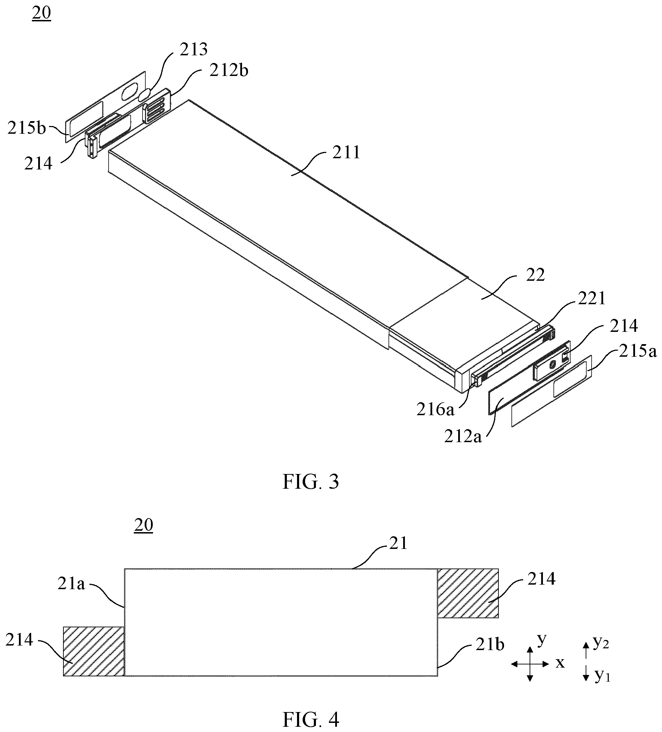

As shown in FIG. 3, which is a schematic structural diagram of a battery cell 20 according to an embodiment of the present application, a battery cell 20 includes one or more electrode assemblies 22, a housing 211, a first cover plate 212a, and a second cover plate 212b. A wall of the housing 211 as well as the first cover plate 212a and the second cover plate 212b are referred to as a wall of the battery cell 20. The housing 211 is determined according to a combined shape of one or more electrode assemblies 22. As an example, the housing 211 shown in FIG. 3 may be a hollow cuboid. At least one face of the housing 211 has an opening such that one or more electrode assemblies 22 may be placed in the housing 211. For example, in an embodiment shown in FIG. 3, two opposite faces of the housing 211 both have an opening, and the first cover plate 212a and the second cover plate 212b respectively cover openings on the two faces and are connected with the housing 211, so as to form a closed cavity for placing the electrode assembly 22. The housing 211 is filled with an electrolyte, such as an electrolytic solution.

The battery cell 20 may further include two electrode terminals 214. Optionally, as shown in FIG. 3, the two electrode terminals 214 may be respectively provided on the oppositely provided first cover plate 212a and the second cover plate 212b. Alternatively, in other embodiments, the two electrode terminals 214 may also be provided on two opposite walls in the housing 211.

The first cover plate 212a and the second cover plate 212b are usually in a shape of a flat plate, and the two electrode terminals 214 may be respectively fixed on flat faces of the first cover plate 212a and the second cover plate 212b, and the two electrode terminals 214 are respectively a positive electrode terminal and a negative electrode terminal. Each electrode terminal 214 is respectively provided with a corresponding connecting member, or also known as a current collection member, located between the first cover plate 212a and the electrode assembly 22, as well as between the second cover plate 212b and the electrode assembly 22. The connecting member is configured to electrically connect the electrode assembly 22 and the electrode terminal 214.

Optionally, as shown in FIG. 3, the battery cell 20 may further include a first bracket 216a and a second bracket (not shown in the figure), the first bracket 216a is provided between the electrode assembly 22 and the first cover plate 212a for fixing and connecting the first cover plate 212a. Correspondingly, the second bracket is provided between the electrode assembly 22 and the second cover plate 212b for fixing and connecting the second cover plate 212b. Optionally, the above connecting members connecting the electrode assembly 22 and the electrode terminal 214 may be respectively located in the first bracket 216a and the second bracket.

Optionally, the electrode assembly 22 shown in FIG. 3 may be a laminated structure or a winded structure, and the electrode assembly 22 may be formed into a tab through a die-cutting process, such that the electrode terminal 214 may be connected to the tab through the connecting member, and thus to be electrically connected with the electrode assembly 22.

Specifically, as shown in FIG. 3, in the battery cell 20, each electrode assembly 22 has a first tab 221 and a second tab. The polarity of the first tab 221 and the polarity of the second tab are opposite. For example, when the first tab 221 is a positive electrode tab, the second tab is a negative electrode tab. The first tab 221 of one or more electrode assemblies 22 is connected with an electrode terminal through a connecting member, and the second tab of one or more electrode assemblies 22 is connected with another electrode terminal through another connecting member. For example, as shown in FIG. 3, the electrode terminal 214 located on the first cover plate 212a may be connected with the first tab 221 through a connecting member located in the first bracket 216a. In addition, another electrode terminal 214 located on the second cover plate 212b may be connected with the second tab through another connecting member located on the second bracket.

Optionally, in addition to adopting the structure shown in FIG. 3, the electrode assembly 22 may also be cylindrical. A cylindrical electrode assembly 22 is accommodated in the housing 211, and a contact area between the cylindrical electrode assembly 22 and the housing 211 is small, which reduces a heat transfer area of the electrode assembly 22 to the outside, thereby alleviating a thermal diffusion problem of the battery cell 20.

In addition, when the electrode assembly 22 is cylindrical, a plurality of cylindrical electrode assemblies 22 in the battery cell 20 may be arranged side by side on a horizontal plane, such that a height of each cylindrical electrode assembly 22 soaked in an electrolytic solution is consistent, and each cylindrical electrode assembly 22 has high environmental consistency, which can further alleviate the thermal diffusion problem of the battery cell 20 and improve the overall performance of the battery cell 20.

As an example, continuing to refer to FIG. 3, a pressure relief mechanism 213 may also be provided on a wall of the battery cell 20. The pressure relief mechanism 213 is configured to be actuated when an internal pressure or temperature of the battery cell 20 reaches a threshold value, to relieve the internal pressure or temperature.

Optionally, in another embodiment of the present application, the pressure relief mechanism 213 and the electrode terminal 214 are provided on the same wall of the battery cell 20. As an example, as shown in FIG. 3, both the electrode terminal 214 and the pressure relief mechanism 213 may be provided on the second cover plate 212b of the battery cell 20. Providing the pressure relief mechanism 213 and the electrode terminal 214 on the same wall of the battery cell 20 may facilitate processing and installation of the pressure relief mechanism 213 and the electrode terminal 214, which is conducive to improving production efficiency of the battery 10.

Of course, in other embodiments of the present application, the pressure relief mechanism 213 and the electrode terminal 214 may also be provided on different walls of the battery cell 20, for example, the two electrode terminals 214 in the battery 10 are respectively provided on the first cover plate 212a and the second cover plate 212b of the battery cell 20, while the pressure relief mechanism 213 is provided on other walls in the battery 10 except for the first cover plate 212a and the second cover plate 212b.

Optionally, the pressure relief mechanism 213 in the embodiments of the present application may be various possible pressure relief mechanisms, which is not limited in the embodiments of the present application. For example, the pressure relief mechanism 213 may be a temperature-sensitive pressure relief mechanism configured to be melted when the internal temperature of the battery cell 20 provided with the pressure relief mechanism 213 reaches a threshold value; and/or, the pressure relief mechanism 213 may be a pressure-sensitive pressure relief mechanism configured to be ruptured when an internal air pressure of the battery cell 20 provided with the pressure relief mechanism 213 reaches a threshold value.

Optionally, continuing to refer to FIG. 3, the battery cell 20 may further include: a first protective layer 215a and a second protective layer 215b, the first protective layer 215a and the second protective layer 215b are respectively covered on the first cover plate 212a and the second cover plate 212b to protect components on the two cover plates. Optionally, when the first cover plate 212a and the second cover plate 212b are metal cover plates, the first protective layer 215a and the second protective layer 215b may be insulation layers for achieving insulation between the metal cover plate and the outside. In addition, it can be seen from FIG. 3 that openings adapted to the electrode terminal 214 and the pressure relief mechanism 213 may be formed on the first protective layer 215a and the second protective layer 215b, such that the electrode terminal 214 is connected with the confluence component through the opening, and the pressure relief mechanism 213 releases the internal air pressure of the battery cell 20 through the opening.

FIG. 4 shows a schematic cross-sectional view of a battery cell 20 according to an embodiment of the present application.

As shown in FIG. 4, the battery cell 20 includes: a housing 21 and two electrode terminals 214, where the housing 21 includes: a first wall 21a and a second wall 21b oppositely provided in a first direction x; the two electrode terminals 214 are respectively located on the first wall 21a and the second wall 21b, and projections of the two electrode terminals 214 on a plane perpendicular to the first direction x are staggered from each other.

Specifically, in the embodiments of the present application, the housing 21 may be a hollow structure, such as a hollow polyhedral structure, and its internal cavity may be used to accommodate an electrode assembly 22 of the battery cell 20, an electrolytic solution and other related components to produce electric energy of the battery cell 20.

In some implementation manners, the housing 21 of the battery cell 20 may be a hollow hexahedron structure, for example, the housing 21 may include the housing 211, the first cover plate 212a and the second cover plate 212b in the embodiment shown in FIG. 3 above. The first wall 21a and the second wall 21b oppositely provided in the first direction x in the embodiments of the present application may be the first cover plate 212a and the second cover plate 212b in the embodiments shown in FIG. 3 above, respectively. The two electrode terminals 214 of the battery cell 20 may be respectively provided on the first cover plate 212a and the second cover plate 212b.

Of course, in other embodiments, the first wall 21a and the second wall 21b in the housing 21 may also be two opposite walls on the housing 211 in the embodiments shown in FIG. 3, and the embodiments of the present application do not limit a specific position of the first wall 21a and the second wall 21b in the housing 21.

In addition, the housing 21 of the battery cell 20 may be a hollow hexahedral structure, as well as other hollow structures such as a hollow cylinder, and the embodiments of the present application do not limit a specific appearance of the housing 21.

For the two electrode terminals 214 in the battery cell 20, they may be electrically connected with other electrical components, so as to achieve electric energy transmission of the battery cell 20. Specifically, the two electrode terminals 214 include a positive electrode terminal and a negative electrode terminal, and the positive electrode terminal is used to be electrically connected with a positive electrode plate in the battery cell 20, and the negative electrode terminal is used to be electrically connected with a negative electrode plate in the battery cell 20. Specifically, for relevant technical solution of the two electrode terminals 214, reference may be made to relevant descriptions of the above embodiments, which will not be repeated herein.

It can be understood that the electrode terminal 214 may include a metal component to achieve transmission of the electric energy, and in addition to the metal component, the electrode terminals 214 may also include related insulating structural members to achieve installation and setting of the electrode terminal 214 on the housing 21. In the embodiments of the present application, the metal component used to transmit the electric energy of the battery cell 20 and the related structural members used for the installation of the metal component are collectively referred to as the electrode terminal 214, and the embodiments of the present application do not limit a specific structure inside the electrode terminal 214.

Optionally, in the embodiments of the present application, the electrode terminal 214 may be a polyhedral structure or a columnar structure. As an example, in the embodiment shown in FIG. 4, the electrode terminal 214 may be a polyhedral structure, for example, a rectangular hexahedral structure or a trapezoidal hexahedral structure. In this case, each surface of the electrode terminal 214 has a certain area, which is convenient for the electrode terminal 214 to contact with other components and achieve a relatively reliable electrical connection.

As shown in FIG. 4, in the embodiments of the present application, the two electrode terminals 214 are respectively provided on the first wall 21a and the second wall 21b that are oppositely provided in the first direction x, and the two electrode terminals 214 are provided in the staggered manner in the first direction x, that is, the projections of the two electrode terminals 214 on the plane perpendicular to the first direction x are staggered from each other. For convenience of description, the plane perpendicular to the first direction x is also referred to as a first plane in the following embodiments.

Specifically, a projection of a first electrode terminal in the two electrode terminals 214 on the first plane is a first projection, and a projection of a second electrode terminal in the two electrode terminals 214 on the first plane is a second projection, where the first projection and the second projection are separated from each other and do not overlap each other.

In the technical solution of the embodiments of the present application, the two electrode terminals 214 in the battery cell 20 are respectively provided on the first wall 21a and the second wall 21b that are oppositely provided in the first direction x in the housing 21, and the projections of the two electrode terminals 214 on the plane perpendicular to the first direction x is staggered from each other. When one electrode terminal 214 in the two electrode terminals 214 is electrically connected with other electrical components (for example, electrode terminals of other battery cells), other electrical components may be arranged side by side with the electrode terminal 214 of the battery cell 20 on the first plane perpendicular to the first direction x by using space perpendicular to the first direction x. At least a portion of the projection of an electrical connection part of other electrical components on the first plane may overlap with the projection of the other electrode terminals 214 in the two electrode terminals 214 on the first plane. Therefore, through the technical solution of the embodiments of the present application, space of the battery cell 20 in a second direction perpendicular to the first direction x may be used to achieve an electrical connection between the electrode terminal 214 of the battery cell 20 and other electrical components, while other electrical components do not need to occupy additional space in the first direction x, thereby saving space required to achieve the electrical connection of the battery cell 20, improving a space utilization rate of the battery cell 20 in a box body 100 of battery 10, and reducing an overall volume of the battery 10. Alternatively, the saved space may be used to optimize the interior of the battery cell 20 or related components inside the battery 10, so as to improve overall performance of the battery cell 20 and the battery 10.

Optionally, in some embodiments, the two electrode terminals 214 may be provided symmetrically relative to the center of the battery cell 20. In this case, the external shape of the two electrode terminals 214 may be the same, and an overall structure of the battery cell 20 is relatively regular, which facilitates production and manufacturing of the battery cell 20 and also improves the installation stability of the battery cell 20 in the box body.

Certainly, in other implementation manners, the two electrode terminals 214 may not be provided symmetrically relative to the center of the battery cell 20. In the embodiment shown in FIG. 4, when the first electrode terminal on the first wall 21a is mirrored to the second wall 21b, a mirror image of the virtual first electrode terminal on the second wall 21b may be attached to or closely spaced with the second electrode terminal. Through the implementation manner, when a plurality of battery cells 20 are provided in the box body of the battery, adjacent electrode terminals 214 in adjacent battery cells 20 may be attached to each other or a distance between the two is relatively close, which facilitates the electrical connection between the plurality of battery cells 20.

Optionally, in the battery cell 20, the two electrode terminals are provided in the staggered manner towards the opposite two sub directions in a second direction y relative to the center of the walls they are located on, where the second direction y is perpendicular to the first direction x.

As an example, in the embodiments shown in FIG. 4, in the battery cell 20, both the first wall 21a and the second wall 21b are provided perpendicular to the first direction x, that is, oppositely provided parallel to the second direction y. The two electrode terminals 214 are provided in the staggered manner towards the opposite two sub directions in the second direction y.

Optionally, the first electrode terminal in the two electrode terminals 214 is located on the first wall 21a, and the first electrode terminal is towards a first sub direction yi in the second direction y relative to the center of the first wall 21a. However, the second electrode terminal in the two electrode terminals 214 is located on the second wall 21b, the second electrode terminal is towards a second sub direction y₂ in the second direction y relative to the center of the second wall 21b, and the second sub direction y₂ is opposite to the above first sub direction yi.

Through the technical solution of the implementation manner, the two electrode terminals 214 are provided in the staggered manner towards the opposite two sub directions in the second direction y relative to the center of the walls they are located on, and the two electrode terminals 214 have relatively sufficient setting space in the second direction y. At the same time, in the second direction y, one side of each electrode terminal 214 has relatively sufficient space to accommodate other electrical components electrically connected with the electrode terminal 214, thereby facilitating the electrical connection between each electrode terminal 214 and other electrical components, further improving the space utilization rate of the battery cell 20 and improving the overall performance of the battery cell 20.

It should be noted that, as an example, in the embodiment shown in FIG. 4, the first wall 21a and the second wall 21b are perpendicular to the first direction x, in addition to the implementation manner shown in this example, the first wall 21a and the second wall 21b may not be perpendicular to the first direction x. At this time, the two electrode terminals 214 may also be provided in the staggered manner towards the opposite two sub directions in the second direction y relative to the center of the walls they are located on, and the second direction y is not perpendicular to the first direction x.

Optionally, in some implementation manners, the above second direction y may be parallel to the gravity direction or perpendicular to the gravity direction.

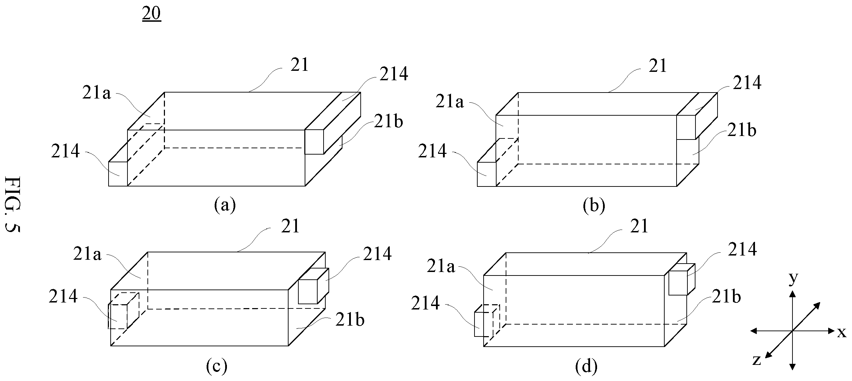

FIG. 5 shows a schematic perspective view of several battery cells 20 according to an embodiment of the present application.

As shown in FIG. 5, the second direction y may be parallel to the gravity direction, and the two electrode terminals 214 are provided in the staggered manner respectively towards the gravity direction and a direction opposite to gravity direction.

In the implementation manner, any electrode terminal 214 in the battery cell 20 may form an interaction force with other electrical components (such as electrode terminals 214 of other battery cells 20) in the gravity direction, thereby enhancing rigidity and strength in the gravity direction between the adj acent battery cells 20. When the battery 10 is installed on a chassis of a vehicle 1, when it is hit by an external object such as a flying stone from the bottom of the vehicle, the adjacent battery cells 20 can withstand an impact of an external force in the gravity direction. Therefore, the electrical connection has high reliability, which can improve installation reliability and safety of the battery 10 in the vehicle 1 and other power consumption apparatuses.

Optionally, as shown in (a) and (b) of FIG. 5, the two electrode terminals 214 may extend in a third direction z, and their size in the third direction z may be the same or close to the size of the first wall 21a and the second wall 21b in the third direction z, where the third direction is perpendicular to the first direction x and the second direction y.

In the implementation manner, the two electrode terminals 214 have a large area in the second direction y, which facilitates the electrical connection between the electrode terminal 214 and other electrical components in the second direction y, improving the electrical connection reliability of the battery cell 20. In addition, in the implementation manner, the two electrode terminals 214 may also have a large volume, therefore, it facilitates that at least a portion of internal components of the battery cell 20 (such as a connecting member used to achieve the connection between the electrode terminal 214 and the electrode component 213) may be provided in internal space of the electrode terminal 214, improving the overall performance of the battery cell 20.

Optionally, as shown in (c) and (d) of FIG. 5, the size of the two electrode terminals 214 in the third direction z may also be smaller than the size of the first wall 21a and the second wall 21b in the third direction z, but greater than or equal to 3 mm.

In the implementation manner, on the basis of ensuring the electrical connection reliability of the battery cell 20, the size of the electrode terminal 214 may be reduced, thereby further reducing volume required by the battery cell 20 and reducing an overall mass of the battery cell 20.

Optionally, as shown in (a) and (c) of FIG. 5, the second direction y is parallel to a thickness direction of the battery cell 20. In the thickness direction, the size of the battery cell 20 is smaller than the size of the battery cell 20 in other directions. Alternatively, as shown in (b) and (d) of FIG. 5, the second direction y may also be parallel to a width direction of the battery cell 20, and the third direction z is parallel to the thickness direction of the battery cell 20. That is, in the implementation manner, the size of the battery cell 20 in the second direction y may be larger than the size of the battery cell 20 in the third direction z.

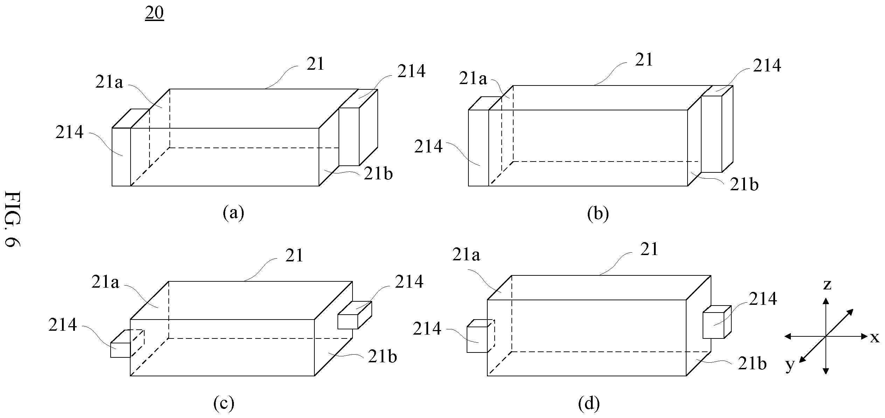

FIG. 6 shows a schematic perspective view of several battery cells 20 according to an embodiment of the present application.

As shown in FIG. 6, the second direction y may be perpendicular to the gravity direction, and the two electrode terminals 214 are provided in the staggered manner respectively towards two opposite horizontal directions.

In the implementation manner, any one of the electrode terminals 214 in the battery cell 20 may form the interaction force with other electrical components (such as electrode terminals 214 of other battery cells 2) in the horizontal direction, thereby enhancing the rigidity and the strength between the adjacent battery cells 20 in the horizontal direction. In addition, in the implementation manner, connecting surfaces of the adjacent electrode terminals 214 between the adjacent battery cells 20 may be parallel to the gravity direction, which may facilitate a welding tool to weld the two connecting surfaces in the gravity direction, and improve production and manufacturing efficiency of the battery 10.

Similar to the embodiment shown in FIG. 5 above, in the embodiments of the present application, as shown in (a) and (b) of FIG. 6, the two electrode terminals 214 may extend in the third direction z, and their size in the third direction z may be the same or close to the size of the first wall 21a and the second wall 21b in the third direction z.

As shown in (c) and (d) of FIG. 6, the size of the two electrode terminals 214 in the third direction z may also be smaller than the size of the first wall 21a and the second wall 21b in the third direction z, but greater than or equal to 3 mm.

Optionally, as shown in (b) and (d) of FIG. 6, the second direction y is parallel to a thickness direction of the battery cell 20. In the thickness direction, the size of the battery cell 20 is smaller than the size of the battery cell 20 in other directions. Alternatively, as shown in (a) and (c) of FIG. 6, the second direction y may also be parallel to a width direction of the battery cell 20, while the third direction z is parallel to the thickness direction of the battery cell 20. That is, in the implementation manner, the size of the battery cell 20 in the second direction y may be greater than the size of the battery cell 20 in the third direction z.

In the above embodiments shown in FIGS. 5 and FIGS. 6, an arrangement direction of the first wall 21a and the second wall 21b provided with the electrode terminals 214, that is, the first direction x, is parallel to a length direction of the battery cell 20. The two electrode terminals 214 are respectively located at two ends of the battery cell 20 in its length direction. Therefore, the battery cell 20 may be connected with other battery cells 20 or the box body 100 through a wall with a large area in the length direction of the housing 21, improving the connection reliability between the plurality of battery cells 20, or improving the connection reliability between the battery cell 20 and the box body 200, and enhancing the overall rigidity and strength of the battery 10, thus improving safety performance of the battery 10 in the power consumption apparatus.

Optionally, at least one wall located in the length direction in the housing 21 of the battery cell 20 may be inclined relative to the gravity direction. Through the implementation manner, the wall inclined relative to the gravity direction of may be attached to the walls of other battery cells 20 that are also inclined relative to the gravity direction, so as to generate an interaction force in the gravity direction, and the two are restrained and pressed against each other, which may further improve the connection stability between the adjacent battery cells 20.

Continuing to refer to FIG. 5 and FIG. 6, except that the electrode terminal 214 may adopt a size design in the above third direction z, the size design of the electrode terminal 214 in other directions, such as the first direction x and the second direction y, may be referred to below describe.

Taking the first electrode terminal provided on the first wall 21a as an example, optionally, in the first direction x, the size of the first electrode terminal may be between 3 mm and 25 mm. Through the design of the size, the first electrode terminal does not occupy too much space, and also has a certain area, which facilitates the electrical connection between the first electrode terminal and other electrical components. As an example, but not a limitation, in some relatively specific implementation manners, the size of the first electrode terminal 214 in the first direction x may be between 4 mm and 8 mm.

Similarly, the size of the second electrode terminal provided on the second wall 21b may also be designed according to the above size range.

In addition, optionally, in the second direction y, the size of the first electrode terminal may be less than or equal to half of the size of the first wall 21a. Likewise, in the second direction y, the size of the second electrode terminal may also be less than half of the size of the second wall 21b. In the implementation manner, the space of the first wall 21a or the second wall 21b towards the outside of the battery cell 20 may be used to accommodate the electrode terminal 214 of the battery cell 20 itself and the electrode terminals 214 of other battery cells 20, without bringing additional space occupation, which facilitates to improve the space utilization rate of the battery cell 20 and also facilitates the installation and setting of the battery cell 20 in the box body 100.

Furthermore, optionally, in the second direction y, the size of the first electrode terminal and/or the second electrode terminal may be greater than or equal to 5 mm, such that the two electrode terminals 214 have a certain rigidity and strength in the second direction y, and can resist an impact of an external force on the electrode terminal 214 and its connected electrical components, thereby improving the reliability and safety of the battery cell 20 and the battery 10 where it is located.

Continuing to refer to FIG. 5 and FIG. 6, optionally, in the embodiments of the present application, the housing 21 of the battery 20 further includes a third wall and a fourth wall oppositely provided in the second direction y, the two electrode terminals 214 located on the first wall 21a and the second wall 21b are reliably provided close to the third wall and the fourth wall, and the surfaces of the two electrode terminals 214 may be flush with the third wall and the fourth wall, respectively. In other words, the surfaces of the two electrode terminals 214 may be located on the same plane as the third wall and the fourth wall, respectively.

In the implementation manner, when the third wall and/or the fourth wall of the battery cell 20 is abutted against other components in the second direction y, the electrode terminal 214 may also be abutted against other components, so as to enhance the installation stability of the battery cell 20.

Alternatively, in other implementation manners, the surfaces of the two electrode terminals 214 may not be flush with the third wall and the fourth wall. In the implementation manner, a volume and a mass of the electrode terminal 214 may be further reduced, thereby reducing space and a mass required for the battery cell 20 and the battery 10 where it is located.

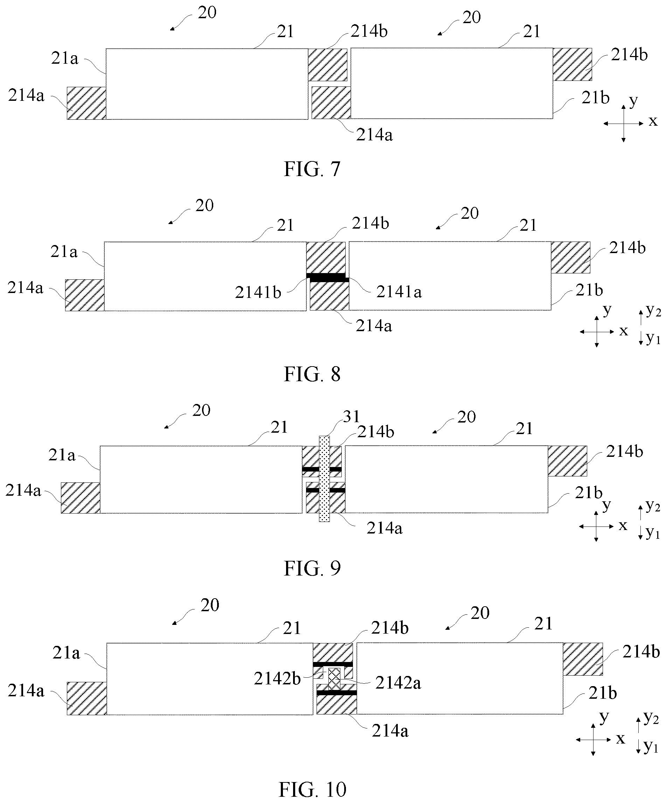

The relevant technical solution of the single battery cell 20 in the embodiments of the present application are described above with reference to FIG. 3 to FIG. 6. The electrical connection solution that may be used when the single battery cell 20 is electrically connected with other battery cells 20 will be described below with reference to FIGS. 7 to 10.

Optionally, in some implementation manners, in the second direction y, at least one electrode terminal 214 in the two electrode terminals 214 in the battery cell 20 may be provided opposite to the electrode terminals 214 of other battery cells 20, so as to facilitate the electrical connection of the electrode terminals 214 of the two battery cells 20 in the second direction y.

FIG. 7 shows a schematic diagram of two adjacent battery cells 20.

As shown in FIG. 7, in the embodiments of the present application, the two battery cells 20 may be arranged in the first direction x, and in each battery cell 20, the two electrode terminals 214 are provided opposite to each other towards two sub directions in the second direction y.

As an example, the first electrode terminal located on the first wall 21a of the battery cell 20 may be a positive electrode terminal 214a, and correspondingly, the second electrode terminal located on the second wall 21b of the battery cell 20 may be a negative electrode terminal 214b. When the two battery cells 20 are arranged in the first direction x, the positive electrode terminal 214a of one battery cell 20 is provided opposite to the negative electrode terminal 214b of the other battery cell 20 in the second direction y.

It can be understood that, through the above related design of the electrode terminal 214 in the battery cell 20, when the two battery cells 20 are arranged adjacent to each other, the positive electrode terminal 214a and the negative electrode terminal 214b that are provided opposite to each other in the second direction y may be close to each other or even attached to each other, such that the positive electrode terminal 214a and the negative electrode terminal 214b may be connected with each other in the second direction y more conveniently.

Optionally, in some examples, at least one electrode terminal 214 in the battery cell 20 may include a connecting face perpendicular to the second direction y, and in the second direction y, the at least one electrode terminal 214 may be connected with connecting faces of electrode terminals 214 of other battery cells 20 to achieve the electrical connection between the battery cell 20 and other battery cells 20.

On the basis of the embodiment shown in FIG. 7, FIG. 8 shows a schematic diagram of an electrical connection of two battery cells 20.

As shown in FIG. 8, in the two battery cells 20, the positive electrode terminal 214a of one of the battery cells 20 is provided towards a first sub direction yi in the second direction y relative to the center of the first wall 21a, and the terminal 214a includes a first connecting surface 2141a towards a second sub direction y₂ in the second direction y. Correspondingly, the negative electrode terminal 214b of the other battery cell 20 is provided toward the second sub direction y₂ in the second direction y relative to the center of the second wall 21b, and the negative electrode terminal 214b includes a second connecting face 2141b towards the first sub direction yi in the second direction y.

The first connecting face 2141a and the second connecting face 2141b may be at least some surfaces of metal components in the electrode terminal 214 (as shown in a black area in FIG. 8), and the first connecting face 2141a and the second connecting face 2141b may be parallel to each other. After the first connecting face 2141a and the second connecting face 2141b are attached to each other, the first connecting face 2141a and the second connecting face 2141b may be welded to achieve the electrical connection between the two battery cells 20.

In the technical solution of the implementation manner, the at least one electrode terminal 214 in the battery cell 20 is used to connect the connecting face perpendicular to the second direction y with the connecting faces of the electrode terminals 214 of other battery cells 20, so as to achieve the electrical connection between the battery cell 20 and other battery cells 20. The electrical connection method does not require additional electrical connection components, and the electrical connection of a plurality of battery cells 20 may be achieved through design of the electrode terminal 214 of the battery cell 20 itself. An overall manufacturing cost is relatively low, and electrical connection reliability is relatively strong.

Optionally, in some other examples, at least one electrode terminal 214 in the battery cell 20 may be provided with an opening extending in the second direction y, and an electrical connector 31 is provided in the opening, and the electrical connector 31 is connected to the electrode terminals 214 of other battery cells 20 to achieve the electrical connection between the battery cell 20 and other battery cells 20.

On the basis of the embodiment shown in FIG. 7, FIG. 9 shows a schematic diagram of another electrical connection of two battery cells 20.

As shown in FIG. 9, in the two battery cells 20, the positive electrode terminal 214a of one of the battery cells 20 may be provided with an opening extending in the second direction y and penetrating the positive electrode terminal 214a. It should be noted that, the opening may pass through a metal component in the positive electrode terminal 214 (as shown in the black area in FIG. 9), and when the electrical connector 31 passes through the opening, the electrical connector 31 may contact the metal component in the positive electrode terminal 214a, thereby achieving the electrical connection between the electrical connector 31 and the positive electrode terminal 214a. Correspondingly, the negative electrode terminal 214b of another battery cell 20 may also be provided with an opening extending in the second direction y and penetrating the negative electrode terminal 214b, and the electrical connector 31 passes through openings of the positive electrode terminal 214a and the negative electrode terminal 214b to achieve the electrical connection between the two.

Optionally, in the embodiment of the present application, the electrical connector 31 may be a metal material component, which has strong rigidity and good electrical conductivity. As an example, but not a limitation, the electrical connector 31 may be a metal bolt. Cooperating with the metal bolt, the electrode terminal 214 of the battery cell 20 may be provided with a threaded structure to strengthen fastness between the electrode terminal 214 and the electrical connector 31, thereby further improving the stability and reliability of the battery cell 20.

It should be noted that, in the embodiment shown in FIG. 9, through holes are formed in the positive electrode terminal 214a and the negative electrode terminal 214b oppositely provided in the second direction y, so as to facilitate a through connection of the electrical connector 31. In other embodiments, one of the positive electrode terminal 214a and the negative electrode terminal 214b forms a through hole, while the other may form a semi-through blind hole, which may also achieve the connection between the electrical connector 31 and the positive electrode terminal 214a and the negative electrode terminal 214b.

In the technical solution of the embodiment, the electrode terminals 214 of the two battery cells 20 may be penetrated by the electrical connector 31 to achieve the electrical connection between the two battery cells 20. Although the implementation manner requires additional electrical connectors 31, an implementation process is relatively simple. The electrode terminals 214 connected with each other through the electrical connector 31 also have high connection stability and reliability, which can withstand the impact of the external force, thereby improving the overall performance of the battery cell 20.

Optionally, in a third example, a surface of at least one electrode terminal 214 in the battery cell 20 towards the second direction y may be provided with a convex structure 2142a or a concave structure 2142b, and the convex structure 2142a or the concave structure 2142b cooperate with the concave structure 2142b or the convex structure 2142a of the electrode terminals 214 of other battery cells 20 to achieve the electrical connection between the battery cell 20 and other battery cells 20.

On the basis of the embodiment shown in FIG. 7, FIG. 10 shows a schematic diagram of another electrical connection of two battery cells 20.

As shown in FIG. 10, in the two battery cells 20, the positive electrode terminal 214a of one of the battery cells 20 is provided towards the first sub direction yi in the second direction y relative to the center of the first wall 21a, and a surface of the positive electrode terminal 214a towards the second sub direction y₂ in the second direction y is provided with the convex structure 2142a. Correspondingly, the negative electrode terminal 214b of the other battery cell 20 is provided towards the second sub direction y₂ in the second direction y relative to the center of the second wall 21b, and a surface of the negative electrode terminal 214b towards the first sub direction yi in the second direction y is provided with the concave structure 2142b that cooperates with the convex structure 2142a.

Specifically, both the convex structure 2142a and the concave structure 2142b are connected to a metal component in the electrode terminal 214 (as shown in a black area in FIG. 10), and a material of the convex structure 2142 may also be a metal material. When the convex structure 2142a and the concave structure 2142b are cooperated with each other and buckled together, the convex structure 2142a in the positive electrode terminal 214a may be connected to the metal component in the negative electrode terminal 214b through the concave structure 2142b in the negative electrode terminal 214b, thereby achieving the electrical connection between the positive electrode terminal 214a and the negative electrode terminal 214b.

It can be understood that, in the embodiment of the present application shown in FIG. 10 above, the positive electrode terminal 214a may be provided with the concave structure 2142b, and the negative electrode terminal 214b may be provided with the corresponding convex structure 2142a. For the specific solution under the implementation manner, please refer to the relevant description above, and details will not be repeated here.

It can also be understood that the convex structure 2142a shown in FIG. 10 may be a block structure, and its corresponding concave structure 2142b is a square groove structure. In addition to the block structure and the square groove structure, the convex structure 2142a and its corresponding concave structure 2142b may also be any other mutually compatible shape, which is not specifically limited by the embodiments of the present application.

In the technical solution of the embodiment, the convex structure 2142a or the concave structure 2142b is provided on the surface of the electrode terminal 214 of the battery cell 20, and through the mutual cooperation of the convex structure 2142a and the concave structure 2142b of the two electrode terminals 214 in the two battery cells 20, the electrical connection between the two battery cells 20 is achieved. The implementation manner does not require assistance of a welding process, nor does it require additional electrical connectors 31, and a stable and reliable connection between the two electrode terminals 214 may be achieved by simply improving the electrode terminal 214. On the basis of ensuring the electrical connection performance of the battery cell 20, the implementation manner has a simple process and a low manufacturing cost, which is conducive to production and popularization of the battery cell 20.

It should be noted that FIG. 8 to FIG. 10 above only serve as examples to illustrate several electrical connection methods of the battery cell 20 according to the embodiments of the present application. In addition to the electrical connection methods shown in the figures, adjacent positive electrode terminal 214a and negative electrode terminal 214b in the two battery cells 20 may also be connected with each other through other connection methods in related technologies, such as through a conductive adhesive or through a sliding groove, which is not specifically limited by the embodiments of the present application.

In addition to the battery cell 20 according to the above embodiments of the present application, the present application further provides a battery 10, including: a box body 100 and a plurality of battery cells 20 according to any of the above possible embodiments. The box body 100 is configured to accommodate a plurality of battery cells 20.

Optionally, the plurality of battery cells 20 may be directly installed in the box body 100 using an installation technology of CTP or CTC, which simplifies an installation process of the plurality of battery cells 20, reduces a mass of the battery 10 and improves energy density of the battery 10.

Optionally, the plurality of battery cells 20 may be arranged in the first direction x, and the adjacent two electrode terminals 214 in the two adjacent battery cells 20 are provided in the staggered manner towards two opposite sub directions in the second direction y, where second direction y is perpendicular to the first direction x, and projections of the adjacent two electrode terminals 214 on a plane perpendicular to the second direction y at least partially overlap.

Through the implementation manner, it is possible to provide the two electrode terminals 214 of the adjacent battery cells 20 relative to each other in the second direction y, so as to facilitate the electrical connection of the electrode terminals 214 of the two battery cells 20 in the second direction y.

In addition, the battery 10 may include the plurality of battery cells 20 arranged in the first direction x, and further include a plurality of rows of battery cells 20 arranged in the second direction y and/or the third direction z.

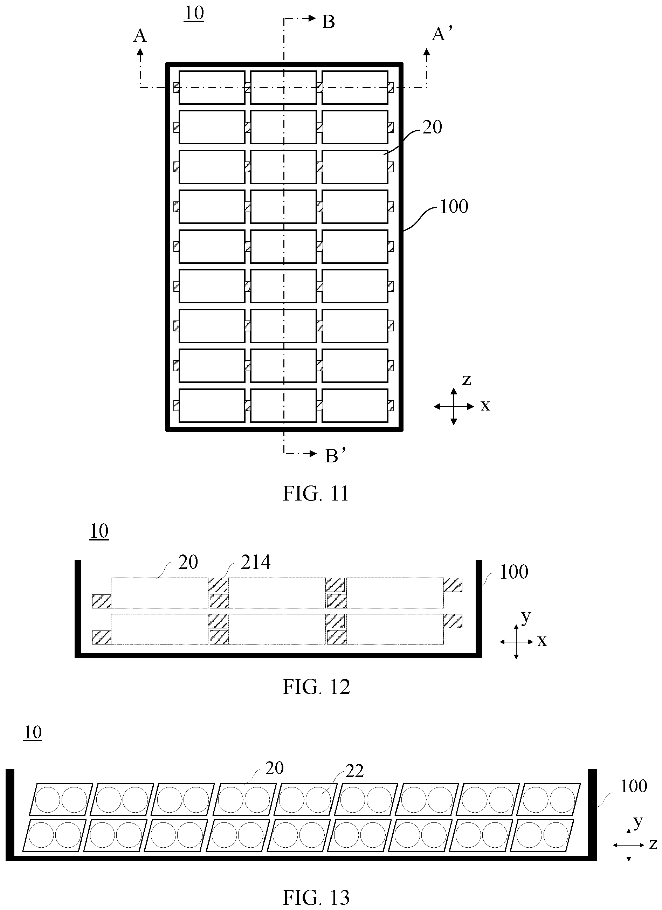

FIG. 11 shows a schematic top view of a battery 10 according to an embodiment of the present application.

As shown in FIG. 11, in the battery 10, a plurality of rows of battery cells 20 arranged in the third direction z are provided in the box body 100, and each row of battery cells 20 includes a plurality of battery cells 20 arranged in the first direction. Optionally, in the implementation manner, the first direction x and the third direction y may be parallel to a horizontal plane, and the plurality of battery cells 20 in the box body 100 are arranged on the horizontal plane, which may improve the installation stability of the plurality of battery cells 20 in the box body 100. In addition, the second direction y is perpendicular to the horizontal plane, that is, parallel to the gravity direction, and the electrode terminals 214 of the two adjacent battery cells 20 are arranged adjacent to each other in the gravity direction, thereby forming an interaction force in the gravity direction, which may resist the impact of the external force in the gravity direction.

FIG. 12 shows a schematic cross-sectional view of FIG. 11 along an A-A' direction.

Optionally, as shown in FIG. 12, when the second direction y is parallel to the gravity direction, multiple layers of battery cells 20 stacked in the gravity direction may also be provided in the box body 100. As an example, in the embodiment shown in FIG. 12, a thickness direction of the battery cell 20 is parallel to the second direction y, that is, parallel to the gravity direction, thereby facilitating stacking of the multiple layers of battery cells 20 in the gravity direction.

Optionally, if a width direction of the battery cell 20 is parallel to the gravity direction, in order to ensure the stability in the gravity direction, only one layer of battery cells 20 may be provided in the box body 100 in the gravity direction.

Specifically, for the relevant technical solution of the battery cell 20 in the embodiment shown in FIG. 12, reference may be made to relevant description of the above embodiments of the present application, and details will not be repeated herein.

FIG. 13 is a schematic cross-sectional view of FIG. 11 along a B-B' direction.

As shown in FIG. 13, when the second direction y is parallel to the gravity direction, the housing 21 of the battery cell 20 may include walls provided opposite to each other in the third direction z and inclined relative to the gravity direction. In the third direction z, two adjacent walls inclined relative to the gravity direction are attached to each other, so as to realize the connection of the adjacent battery cells 20. The two inclined walls may generate an interaction force in the gravity direction, and the two are restrained and pressed against each other, thereby improving the connection reliability of the adjacent battery cells 20 in the gravity direction, enhancing the rigidity and the strength of battery 10 in the gravity direction, and enhancing the overall performance of the battery 10.

Optionally, the battery cell 20 may include at least one cylindrical electrode assembly 22. For example, as shown in FIG. 13, the battery cell 20 may include two cylindrical electrode assemblies 22. In each layer of battery cells 20, a plurality of cylindrical electrode assemblies 22 are arranged side by side in a horizontal direction, such that a height of each cylindrical electrode assembly 22 soaked in an electrolytic solution is consistent, and each cylindrical electrode assembly 22 has high environmental consistency, which can further alleviate the thermal diffusion problem of the battery cell 20 and improve the overall performance of the battery cell 20.

An embodiment of the present application further provides a power consumption apparatus, which may include the battery 10 according to the forgoing embodiments, where the battery 10 is configured to provide electric energy to the power consumption apparatus.

Optionally, the power consumption apparatus may be a vehicle 1, a ship or a spacecraft.

The above describes the battery cell 20, the battery 10, and the power consumption apparatus according to the embodiments of the present application. The following will describe the method and apparatus for preparing the battery according to the embodiments of the present application, and parts not described in detail can be referred to in the aforementioned embodiments.

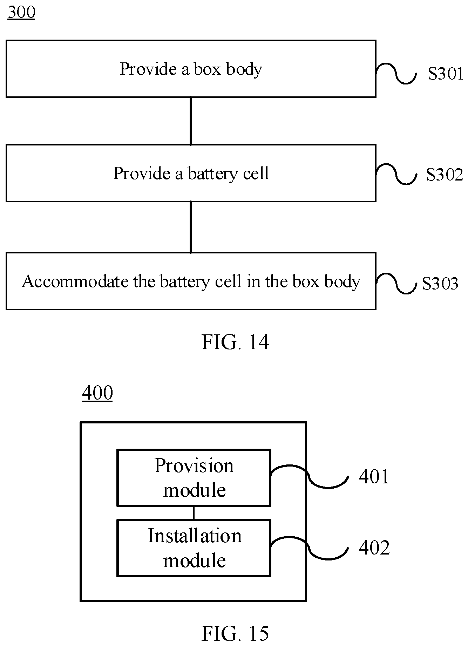

FIG. 14 shows a schematic flowchart of a method 300 for preparing a battery according to an embodiment of the present application. As shown in FIG. 14, the method 300 may include the following steps:
S301: providing a box body 100.

S302: providing a battery cell 20, where the battery cell 20 includes: a housing 21 and two electrode terminals 214, where the housing 21 includes: a first wall 21a and a second wall 21b oppositely provided in a first direction x; the two electrode terminals 214 are respectively located on the first wall 21a and the second wall 21b, and projections of the two electrode terminals 214 on a plane perpendicular to the first direction x are staggered from each other.

S303: accommodating the battery cell 20 in the box body 100.

FIG. 15 shows a schematic block diagram of an apparatus 400 for preparing a battery according to an embodiment of the present application. As shown in FIG. 15, the apparatus 400 for preparing a battery may include: a provision module 420 and an installation module 402.

The provision module 401 is configured to: provide a box body 100, and provide a battery cell 20, where the battery cell 20 includes: a housing 21 and two electrode terminals 214, where the housing 21 includes: a first wall 21a and a second wall 21b oppositely provided in a first direction x; the two electrode terminals 214 are respectively located on the first wall 21a and the second wall 21b, and projections of the two electrode terminals 214 on a plane perpendicular to the first direction x are staggered from each other.

The installation module 402 is configured to: accommodate the battery cell 20 in the box body 100.

Although the present application is already described with reference to the preferred embodiments, various improvements may be made to the present application and the components therein may be replaced with equivalents without departing from the scope of the present application. In particular, as long as there is no structural conflict, the technical features mentioned in the various embodiments can be combined in any manner. The present application is not limited to the specific embodiments disclosed herein, and the present application includes all technical solutions falling within the scope of the claims.

## Claims

1. A battery cell (20), comprising:
a housing (21), comprising: a first wall (21a) and a second wall (21b) oppositely provided in a first direction (x);
two electrode terminals (214), respectively located on the first wall (21a) and the second wall (21b), wherein projections of the two electrode terminals (214) on a plane perpendicular to the first direction (x) are staggered from each other.

2. The battery cell (20) according to claim 1, wherein the two electrode terminals (214) are provided in a staggered manner towards opposite two sub directions in a second direction (y) relative to the center of walls they are located on, wherein the second direction (y) is perpendicular to the first direction (x).

3. The battery cell (20) according to claim 2, wherein the second direction (y) is parallel to a gravity direction or perpendicular to the gravity direction.

4. The battery cell (20) according to claim 2 or 3, wherein in the second direction (y), at least one electrode terminal (214) in the two electrode terminals (214) is provided opposite to electrode terminals (214) of other battery cells (20).

5. The battery cell (20) according to claim 4, wherein the at least one electrode terminal (214) comprises a connecting face perpendicular to the second direction (y);
in the second direction (y), the connecting face of the at least one electrode terminal (214) is connected with connecting faces of the electrode terminals (214) of other battery cells (20), so as to achieve an electrical connection between the battery cell (20) and other battery cells (20).

6. The battery cell (20) according to claim 4, wherein the at least one electrode terminal (214) is provided with an opening extending in the second direction (y), an electrical connector (31) is provided in the opening, and the electrical connector (31) is connected to the electrode terminals (214) of other battery cells (20), so as to achieve the electrical connection between the battery cell (20) and other battery cells (20).

7. The battery cell (20) according to claim 4, wherein a surface of the at least one electrode terminal (214) towards the second direction (y) is provided with a convex structure or a concave structure, and the convex structure or the concave structure cooperates with the concave structure or convex structure of the electrode terminals (214) of other battery cells (20), so as to achieve the electrical connection between the battery cell (20) and other battery cells (20).

8. The battery cell (20) according to any one of claims 2 to 7, wherein a first electrode terminal (214) of the two electrode terminals (214) is located on the first wall (21a) in the housing (21), and in the second direction (y), the size of the first electrode terminal (214) is less than or equal to half of the size of the first wall (21a), and/or the size of the first electrode terminal (214) is greater than or equal to 5 mm.

9. The battery cell (20) according to claim 8, wherein in a third direction, the size of the first electrode terminal (214) is smaller than or equal to the size of the first wall (21a), and/or the size of the first electrode terminal (214) is greater than or equal to 3 mm, wherein the third direction is perpendicular to the second direction (y) and the first direction (x).

10. The battery cell (20) according to claim 8 or 9, wherein in the first direction (x), a size range of the first electrode terminal (214) is between 3 mm and 25 mm.

11. The battery cell (20) according to any one of claims 2 to 10, wherein the housing (21) further comprises: a third wall and a fourth wall oppositely provided in the second direction (y), the two electrode terminals (214) are respectively provided close to the third wall and the fourth wall, and surfaces of the two electrode terminals (214) are respectively flush with the third wall and the fourth wall.

12. The battery cell (20) according to any one of claims 1 to 11, wherein the first direction (x) is parallel to a length direction of the battery cell (20), and the battery cell (20) and other battery cells (20) are attached to each other through at least one wall located in the length direction in the housing (21).

13. The battery cell (20) according to claim 12, wherein the at least one wall located in the length direction in the housing (21) is inclined relative to the gravity direction.

14. The battery cell (20) according to any one of claims 1 to 13, wherein the two electrode terminals (214) are provided symmetrically relative to the center of the battery cell (20).

15. The battery cell (20) according to any one of claims 1 to 14, wherein the two electrode terminals (214) are of a polyhedral structure.

16. A battery (10), comprising: a box body (100), and the battery cell (20) according to any one of claims 1 to 15, wherein the box body (100) is configured to accommodate the battery cell (20).

17. The battery (10) according to claim 16, wherein the battery (10) comprises a plurality of battery cells (20) arranged in the first direction (x);
wherein two adjacent electrode terminals (214) in two adjacent battery cells (20) are provided in a staggered manner towards opposite two sub directions in a second direction (y), and wherein the second direction (y) is perpendicular to the first direction (x), and projections of the two adjacent electrode terminals (214) on a plane perpendicular to the second direction (y) at least partially overlap.

18. A power consumption apparatus, comprising: the battery (10) according to claim 16 or 17, wherein the battery (10) is configured to provide electric energy to the power consumption apparatus.

19. A method for preparing a battery, comprising:
providing (S301) a box body (100);
providing (S302) a battery cell (20), wherein the battery cell (20) comprises:
a housing (21), comprising: a first wall (21a) and a second wall (21b) oppositely provided in a first direction (x);
two electrode terminals (214), respectively located on the first wall (21a) and the second wall (21b), wherein projections of the two electrode terminals (214) on a plane perpendicular to the first direction (x) are staggered from each other;
and accommodating (S303) the battery cell (20) in the box body (100).

20. An apparatus for preparing a battery, comprising:
a provision module (401), configured to provide a box body (100) and a battery cell (20), wherein the battery cell (20) comprises:
a housing (21), comprising: a first wall (21a) and a second wall (21b) oppositely provided in a first direction (x);
two electrode terminals (214), respectively located on the first wall (21a) and the second wall (21b), wherein projections of the two electrode terminals (214) on a plane perpendicular to the first direction (x) are staggered from each other;
and an installation module (402), configured to accommodate the battery cell (20) in the box body (100).
